Europäisches Patentamt

European Patent Office

Office européen des brevets

(11) Numéro de publication: **0 319 381 B1**

(12) **FASCICULE DE BREVET EUROPEEN**

(45) Date de publication de fascicule du brevet: **05.08.92**  (51) Int. Cl.⁵: **F16D 3/84**

(21) Numéro de dépôt: **88402970.3**

(22) Date de dépôt: **25.11.88**

(54) Soufflet de protection notamment pour transmission avant de véhicule automobile.

(30) Priorité: **01.12.87 FR 8716631**

(43) Date de publication de la demande:
**07.06.89 Bulletin 89/23**

(45) Mention de la délivrance du brevet:
**05.08.92 Bulletin 92/32**

(84) Etats contractants désignés:
**BE DE ES GB IT SE**

(56) Documents cités:
| | |
|---|---|
| DE-A- 2 714 983 | DE-A- 2 933 695 |
| FR-A- 1 226 861 | FR-A- 1 474 969 |
| FR-A- 2 172 580 | FR-A- 2 424 438 |
| GB-A- 2 107 412 | US-A- 2 761 295 |

(73) Titulaire: **COMPAGNIE DES PRODUITS INDUS-
TRIELS DE L'OUEST (C.P.I.O.)
Boîte Postale 1226 Zone Industrielle de Nantes Carquefou
F-44023 Nantes Cédex(FR)**

(72) Inventeur: **Lallement, Serge
2, Les Hauts de l'Erdre
F-44240 La Chapelle S/Erdre(FR)**

(74) Mandataire: **Foster, David Martyn et al
MATHISEN MACARA & CO. The Coach House 6-8 Swakeleys Road
Ickenham Uxbridge UB10 8BZ(GB)**

## Description

La présente invention concerne des soufflets de protection en matériau polymère du type thermoplastique, silicones, etc., notamment pour transmission avant de véhicule automobile.

Il est connu de fabriquer de tels soufflets en un matériau polymère du type thermoplastique, silicones, etc. Toutefois, l'utilisation de plus en plus fréquente des pots catalytiques sur les véhicules automobiles soulève un problème: ces pots catalytiques fonctionnent à des températures élevées et peuvent produire un effet défavorable sur les soufflets fabriqués en ces matériaux et placés à proximité de ces pots catalytiques. L'utilisation de matériau du type silicones présente des avantages en ce que ces matériaux ont une meilleure tenue aux hautes températures résultant du rayonnement thermique. Néanmoins, ces matériaux ont un bas module d'élasticité et restent instables en centrifugation. En outre, aux grandes vitesses de rotation, le poids de la graisse contenue à l'intérieur du soufflet peut endommager le matériau du soufflet.

Il est connu du document FR-A-2 172 580 un soufflet du type défini ci-dessus qui comprend une partie conique dotée d'une zone de solidarisation autour du bol de la transmission du véhicule et une face s'éloignant en pente de cette zone et solidarisée avec une deuxième partie s'éloignant de la partie conique le long de l'axe du soufflet de manière à s'étendre autour et le long de l'arbre de transmission, ladite deuxième partie comprenant des zones séparées axialement dont les diamètres sont essentiellement mutuellement identiques et ne sont que minimalement supérieurs au diamètre de l'arbre de transmission, leur jonction étant assurée par des plis de diamètre essentiellement identique.

Toutefois, la forme géométrique de ce soufflet n'est pas de nature à surmonter les problèmes exposés ci-dessus. En conséquence, un tel soufflet est caractérisé selon l'invention par le fait que la face inclinée de la partie conique fait un angle compris entre 0 et 25 degrés avec le plan perpendiculaire à l'axe du soufflet, et par le fait que les flancs des plis sont essentiellement parallèles entre eux et audit plan.

Le degré relatif de raideur de pente de la paroi inclinée de la partie conique réduit au minimum l'espace disponible pour la graisse et ainsi réduit l'effet eventuel d'une lourde masse de graisse qui tourne. La configuration de la deuxième partie assure le minimum d'espace pour la graisse et une rigidité diamétrale considérable.

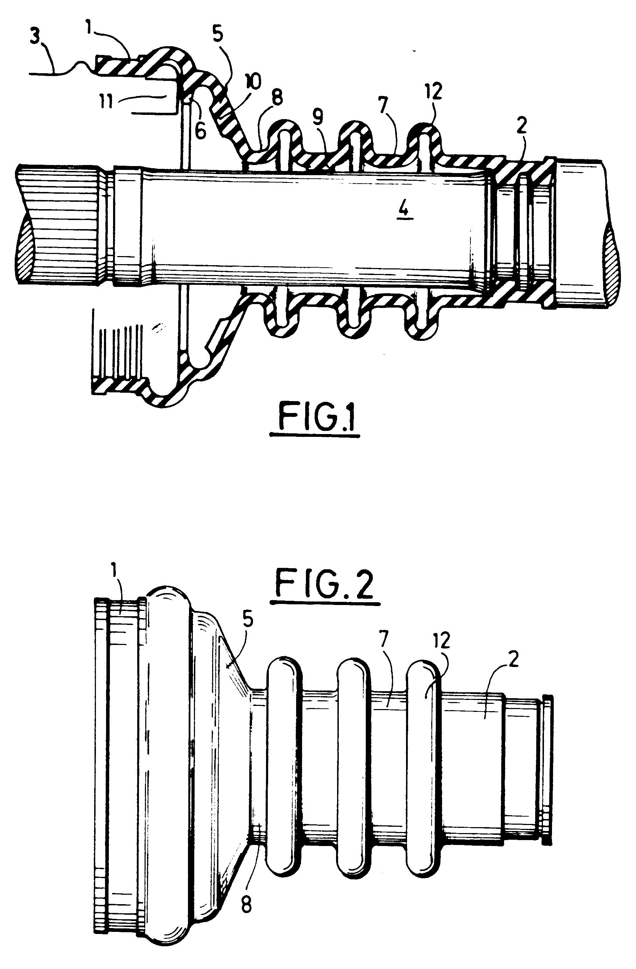

L'invention sera décrite au regard des figures 1 et 2 ci-jointes, données à titre d'exemples non limitatifs, et qui se rapportent respectivement:

- la figure 1 a une vue en coupe longitudinale du soufflet de l'invention en position sur l'arbre de transmission,
- la figure 2 a une vue extérieure du soufflet de l'invention.

En référence à la figure 1, on voit que la géométrie du soufflet est définie de manière à assurer les points suivants:

- Chacune de ses extrémités 1-2 comporte des profils adaptés respectivement aux surfaces du bol 3 et de l'arbre 4 de la transmission sur lequel il est monté sans précontrainte.
- Entre ces deux extrémités, le profil du soufflet se subdivise en deux parties distinctes:
  . l'une conique 5,
  . l'autre cylindrique 7.

La partie conique 5, dont la paroi peut en variante être verticale, assure la jonction de la zone d'accrochage côté bol 3 avec la partie cylindrique 7 du soufflet. A proximité du bol 3, elle assure un volume minimal de graisse. Le fait que cette paroi conique 5 forme un angle compris entre 0 et 25° détermine un comportement optimal en centrifugation. Au droit du bol 3, elle comporte une nervure 6 dont le but est de protéger la zone conique 5 face aux agressivités internes du capot en tôle 3. Elle permet aussi de mieux positionner le soufflet sur le bol 3 en jouant le rôle de butée et contribue à augmenter la rigidité dans cette partie.

L'élément conique 5 peut éventuellement être renforcé par un bossage circulaire 10 de façon qu'il soit protégé des bords extérieurs de la "tulipe trilobée" 11. A la base du cône 5, une zone charnière 8 assure la jonction cône-cylindre. Le débattement de la transmission articule le soufflet dans cette partie 8. Cette dernière prend elle-même appui sur l'arbre 4 lisse et lubrifié de la transmission.

La section cylindrique 7 du soufflet a un diamètre intérieur de l'ordre de 4 mm de plus que le diamètre extérieur de l'arbre 4.

Cette conception place le soufflet dans l'impossibilité de se déstabiliser à haute vitesse puisqu'il est soutenu par l'arbre 4 situé à l'intérieur.

De surcroît, il est possible d'ajouter des talons 9 de guidage prenant appui sur l'arbre 4 lubrifié qui ne créent aucun dommage au soufflet. Le volume de graisse dans cette partie cylindrique reste très faible.

Afin de permettre au soufflet le déplacement axial nécessaire du côté de la boîte, on adjoint des petits plis 12 dont le diamètre extérieur n'excède pas le double de celui de l'arbre 4, et dont les flancs sont parallèles les uns par rapport aux autres et donc perpendiculaires à l'axe de l'arbre 4. Outre la fonction d'autorisation de déplacement axial, une telle forme des plis assure une rigidification notablement accrue dans le sens du diamètre et ce sur toute la longueur de la partie cylindrique 7 du soufflet. Cette conception permet de stabiliser le soufflet garni de graisse quelque soit sa longueur.

## Revendications

1. Soufflet de protection en matériau polymère du type thermoplastique, silicones, etc., pour la transmission d'un véhicule automobile, comprenant une partie conique (5) dotée d'une zone pour solidarisation autour du bol (3) de la boîte de vitesses du véhicule et une face s'éloignant en pente de ladite zone et solidarisée avec une deuxième partie (7) s'éloignant de la partie conique (5) le long de l'axe du soufflet de manière à s'étendre autour, et le long de l'arbre de transmission (4), ladite deuxième partie (7) comprenant des zones séparées axialement dont les diamètres sont essentiellement mutuellement identiques et ne sont que minimalement supérieurs au diamètre de l'arbre de transmission (4), leur jonction étant assurée par des plis (12) de diamètre essentiellement identique, caractérisé par le fait que la face inclinée de la partie conique (5) fait un angle compris entre 0 et 25 degrés avec le plan perpendiculaire à l'axe du soufflet, et en ce que les flancs des plis (12) sont essentiellement parallèles entre eux et audit plan.

2. Soufflet de protection selon la revendication 1 caractérisé en ce que le diamètre extérieur des spires (12) n'excède pas le double du diamètre de l'arbre (4).

3. Soufflet de protection selon la revendication 1 ou 2 caractéerisé en ce que le diamètre intérieur des zones séparées axialement de la deuxième partie (7) n'excède pas 4 mm de plus que le diamètre de l'arbre (4).

4. Soufflet de protection selon l'une ou l'autre des revendications 1 à 3 caractérisé en ce que la partie intérieure des zones séparées axialement de la deuxième partie (7) possède des talons de guidage (9).

5. Soufflet de protection selon l'une ou l'autre des revendications 1 à 4 caractérisé en ce que la jonction entre la partie conique (5) et la second partie (7) est faite par un pli (8) qui constitue une zone articulée.

6. Soufflet de protection selon l'une ou l'autre des revendications 1 à 5 caractérisé en ce que la partie conique (5) reçoit un bossage circulaire (10) de protection.

7. Soufflet de protection selon la revendication 1 caractérisé en ce que la partie conique (5) est pourvue d'une nervure (6) constituant une protection et une rigidification locale.

## Claims

1. A gaiter made of a thermoplastics polymer, silicones or the like for a motor vehicle transmission, the comprising: a conical part (5) having a zone adopted to be rigidly secured around the casting (3) of the vehicle gearbox; and a surface sloping away from such zone and rigidly secured to a second part (7) extending away from the conical part (5) along the gaiter axis around and along the transmission shaft (4), the second part (7) comprising axially separate zones whose diameters are substantially equal to one another and only very slightly greater than the diameter of the transmission shaft (4), the separate zones being joined together by folds (12) of substantially identical diameter, characterised in that the inclined surface of the conical part (5) forms an angle of from 0 to 25° with the plane perpendicular to the gaiter axis and the sides of the folds (12) are substantially parallel to one another and to the latter plane.

2. A gaiter according to claim 1, characterised in that the outer diameter of the folds or convolutions (12) is at most twice the diameter of the transmission shaft (4).

3. A gaiter according to claim 1 or 2, characterised in that the inner diameter of the axially separate zones of the second part (7) is at most 4 mm more than the diameter of the transmission shaft (4).

4. A gaiter according to any of claims 1 to 3, characterised in that the inner part of the axially separate zones of the second part (7) has guide pads or heels or the like (9).

5. A gaitar according to any of claims 1 to 4, characterised in that the joint between the conical part (5) and the second part (7) is in the form of a fold (8) which is effective as an articulated zone.

6. A gaiter according to any of claims 1 to 5, characterised in that the conical part (5) receives a protective circular protuberance (10).

7. A gaitar according to claim 1, characterised in that the conical part (5) has a rib (6) which provides protection and local stiffening.

## Patentansprüche

1. Schutzmanschette aus Polymermaterial des thermoplastischen, Silikon-, usw. Typs, für einen Kraftfahrzeugantrieb mit einem kegelförmigen Teil (5), der mit einem Teil zur Befestigung um die Schale (3) des Fahrzeuggetriebes ausgestattet ist, und einer sich schräg von diesem Teil entfernenden Fläche, die mit einem zweiten Teil (7) verbunden ist, der sich von dem kegelformigen Teil (5) entlang der Achse der Manschette derart entfernt, daß er sich darum erstreckt, und sich entlang der Antriebswelle (4) entfernt, wobei der zweite Teil (7) axial getrennte Bereiche umfaßt, deren Durchmesser untereinander im wesentlichen identisch sind und nur minimal größer sind als der Durchmesser der Antriebswelle (4), wobei ihre Verbindung durch Falten (12) von im wesentlichen dem identischen Durchmesser sichergestellt wird, gekennzeichnet durch die Tatsache, daß die schräge Seite des kegelförmigen Teils (5) einen Winkel zwischen 0 und 25 Grad mit der Ebene senkrecht zur Achse der Manschette bildet und daß die Flanken der Falten (12) im wesentlichen untereinander und zu der Ebene senkrecht sind.

2. Schutzmanschette nach Anspruch 1, dadurch gekennzeichnet, daß der Außendurchmesser der Windungen (12) nicht den doppelten Durchmesser der Welle (4) übersteigt.

3. Schutzmanschette nach Anspruch 1 oder 2, dadurch gekennzeichnet, daß der Innendurchmesser der axial getrennten Bereiche des zweiten Teils (7) nicht um mehr als 4 mm den Durchmesser der Welle (4) übertrifft.

4. Schutzmanschette nach einem der Ansprüche 1 bis 3, dadurch gekennzeichnet, daß der innere Teil der axial getrennten Bereiche des zweiten Teils (7) Führungswulste (9) besitzt.

5. Schutzmanschette nach einem der Ansprüche 1 bis 4, dadurch gekennzeichnet, daß die Verbindung zwischen dem kegelförmigen Teil (5) und dem zweiten Teil (7) durch eine Falte (8) gebildet wird, die einen Gelenkbereich bildet.

6. Schutzmanschette nach einem der Ansprüche 1 bis 5, dadurch gekennzeichnet, daß der kegelförmige Bereich (5) einen kreisförmigen Schutzbuckel (10) aufnimmt.

7. Schutzmanschette nach Anspruch 1, dadurch gekennzeichnet, daß der kegelförmige Teil (7) mit einer Rille (6) versehen ist, die einen Schutz und eine lokale Versteifung bildet.

## FIG.1

## FIG.2